# EUROPEAN PATENT SPECIFICATION

(11) **EP 3 533 287 B1**
(45) Date of publication and mention of the grant of the patent: **09.12.2020**
(21) Application number: 16787427.0
(22) Date of filing: 25.10.2016
(51) Int. Cl.: H05B 6/06

(54) **METHOD FOR CALIBRATING A POWER CONTROL LOOP OF AN INDUCTION HOB**
VERFAHREN ZUR KALIBRIERUNG EINER LEISTUNGSREGELSCHLEIFE EINES INDUKTIONSKOCHFELDS
PROCÉDÉ D'ÉTALONNAGE D'UNE BOUCLE DE COMMANDE DE PUISSANCE D'UNE PLAQUE DE CUISSON À INDUCTION

(43) Date of publication of application: 04.09.2019
(73) Proprietor: Electrolux Appliances Aktiebolag, 105 45 Stockholm (SE)
(72) Inventor: JEANNETEAU, Laurent, 47122 Forli (IT); NOSTRO, Massimo, 47122 Forli (IT); ZANGOLI, Massimo, 47122 Forli (IT); VIROLI, Alex, 47122 Forli (IT)
(74) Representative: Electrolux Group Patents
(86) International application number: PCT/EP2016/075643
(87) International publication number: WO 2018/077384

(56) References cited:
- EP-A1- 0 354 151
- EP-A1- 2 706 816
- FR-A1- 2 168 951
- US-A- 4 396 818

## Description

The present invention relates generally to the field of induction hobs. More specifically, the present invention is related to a method for calibrating the power control loop of an induction hob.

### BACKGROUND OF THE INVENTION

Induction hobs for preparing food are well known in prior art. Induction hobs typically comprise at least one heating zone which is associated with at least one induction element. For heating a piece of cookware placed on the heating zone, the induction element is coupled with electronic driving means for driving an AC current through the induction element. Said AC current generates a time varying magnetic field. Due to the inductive coupling between the induction element and the piece of cookware placed above the induction element, the magnetic field generated by the induction element causes eddy currents circulating in the piece of cookware. The presence of said eddy currents generates heat within the piece of cookware due to the electrical resistance of said piece of cookware.

In order to control the power provided to the piece of cookware, induction hobs comprise a power control loop. For example, the voltage drop over a shunt resistor may be used as a measurand for controlling the power. However, the power control mechanism may be negatively affected by tolerances of electronic elements included in the power control loop. Said tolerances of electronic elements could be compensated by a manual calibration of the power control loop, which is time-consuming and therefore expensive.

Document EP 0 354 151 A1 relates to an induction cooking plate comprising a control unit, an assembly of electronic components forming a power supply circuit, a control circuit and a power circuit in order to supply an inductive coil for heating an utensil, the induction cooking plate further comprising an indication device showing the power effectively supplied to the utensil.

### SUMMARY OF THE INVENTION

It is an objective of the embodiments of the invention to provide a method for manufacturing an induction hob at reasonable costs. The objective is solved by the features of the independent claims. Preferred embodiments are given in the dependent claims. If not explicitly indicated otherwise, embodiments of the invention can be freely combined with each other.

According to an aspect, the invention relates to a method for calibrating one power control loop or at least two power control loops of an induction hob, the induction hob comprising one power stage or at least two power stages including one induction element or at least two induction elements and one measurement unit or at least two measurement units, the method comprising the steps of:
- deriving one measurement value or at least two measurement values being indicative for the power transferred from the one power stage or at least two power stages to one reference load or at least two reference loads by means of said one measurement unit or at least two measurement units;
- storing one correction value or at least two correction values in one storage entity or at least two storage entities in order to modify measurement values provided by the one measurement unit or at least two measurement units based on the one correction value or at least two correction values when operating the induction hob.

According to a further aspect, the invention relates to a method for calibrating a power control loop of an induction hob. The induction hob comprises a power stage including at least one induction element, a measurement unit and a control unit. The method comprises at least one or more of the steps of:
- coupling the at least one induction element with a reference load;
- powering the power stage at predefined working conditions by means of said control unit;
- deriving a measurement value being indicative for the power transferred from the power stage to the reference load by means of said measurement unit;
- providing the measurement value to the control unit;
- calculating a correction value based on the measurement value and a reference value;
- storing the correction value in a storage entity in order to modify measurement values provided by the measurement unit based on the correction value when operating the induction hob.

According to a further aspect, the invention relates to a method for calibrating one power control loop or at least two power control loops of an induction hob. The induction hob comprises one power stage or at least two power stages including one induction element or at least two induction elements, one measurement unit or at least two measurement units and at least one control unit. The method comprises at least one or more of the steps of:
- coupling the one induction element or at least two induction elements with one reference load or at least two reference loads;
- powering the one power stage or at least two power stages at predefined working conditions by means of said at least one control unit;
- deriving one measurement value or at least two measurement values being indicative for the power transferred from the one power stage or at least two power stages to the one reference load or at least two reference loads by means of said one measurement unit or at least two measurement units;

- providing the one measurement value or at least two measurement values to the at least one control unit;
- calculating one correction value or at least two correction values based on the one measurement value or at least two measurement values and one reference value or at least two reference values;
- storing the one correction value or at least two correction values in one storage entity or at least two storage entities in order to modify measurement values provided by the one measurement unit or at least two measurement units based on the one correction value or at least two correction values when operating the induction hob.

The induction hob preferably comprises one power stage, at least two, at least three or at least four power stages, especially two, three, four or six power stages.

In embodiments, the induction hob comprises one driver unit, two or at least two driver units, the driver units preferably generating an output frequency between 10kHz and 100 kHz.

The induction hob preferably comprises one bridge rectifier, two or at least two bridge rectifiers.

The induction hob preferably comprises one filter circuit, two or at least two filter circuits. The filter circuit or the filter circuits can improve the requirements of the electromagnetic compatibility (EMC).

The induction hob is preferably operated with a one-phase electric power supply and/or with a two-phase electric power supply and/or with a three-phase electric power supply. Using more than one phase can increase the maximum output power of the induction hob. The phases of the electric power supply refer preferably two different phases of an alternating-current electric power.

In an embodiment, each power stage is assigned to the same bridge rectifier. In another embodiment, each power stage is assigned to a separate bridge rectifier. In one of these embodiments or in another embodiment, at least two or at least three power stages are assigned to each bridge rectifier.

In further embodiments, each bridge rectifier, each power stage or at least two power stages is/are assigned to the same electric phase or to a separate electric phase.

In further embodiments, each bridge rectifier and/or each power stage is assigned to a filter circuit.

Each power stage preferably comprises one IGBT, one IGBT-pair or at least two IGBTs. Each driver unit preferably drives one or at least two power stages. A power stage and an assigned driver unit can form, in an embodiment, a generator or inverter, which generates an electromagnetic signal with a high frequency to heat at least one piece of cookware, especially a cooking vessel like a pot.

The induction elements are preferably arranged in at least two rows and/or at least two columns, especially in a matrix arrangement.

The induction elements are preferably covered by a surface, especially a cooking surface and/or a glass ceramic surface.

The induction hob is preferably operated with an, especially touch sensitive, user interface, preferably arranged on the surface, especially on the cooking surface of the induction hob.

In further embodiments, at least two power stages and/or induction elements can be coupled to a single cooking zone.

Advantageously, by means of said pre-calculated correction value, an automated and precise calibration of the power control loop included in the induction hob is achieved and no manual calibration, for example, by trimming a potentiometer is necessary.

According to embodiments, the measurement value is derived based on the voltage drop at a shunt resistor being coupled with an arm of a bridge rectifier. By means of said shunt resistor, a measurement value indicative for the power provided from the bridge rectifier to one or more power stages included in the induction hob can be derived. The tolerance of the resistance value of the shunt resistor and other electronic components included in the induction hob may be high, e.g. 5%. Thereby, the electronic component costs of the induction hob can be reduced. By means of said automated calibration process, the tolerances of the electronic components can be compensated thereby obtaining a calibrated power control loop.

According to embodiments, the measurement value is derived based on the voltage drop at a shunt resistor being coupled with a switching element, specifically an insulated-gate bipolar transistor IGBT. Said switching element may be assigned to a certain power stage, i.e. by means of said shunt resistor, a measurement value indicative for the power provided to a certain power stage can be derived. Thus, a precise control power control of a respective power stage is possible. Multiple measurement values may be derived at multiple shunt resistors coupled with different switching elements in order to calibrate multiple power control loops.

According to embodiments, the voltage drop measured at a shunt resistor is received by the measurement unit, the measurement unit providing based on said measured voltage drop the measurement value to the control unit. In other words, the measurement unit converts the measured voltage into a measurement value suitable for the control unit. For example, the measurement unit may amplify the received voltage or may add an offset to said received voltage.

According to embodiments, the reference value and/or correction value is stored in a storage entity, the storage entity being accessible by the control unit. The storage entity may be included in the control unit or may be an external storage entity. The storage entity may comprise a non-volatile storage in order to permanently store the reference value.

According to embodiments, the reference value corresponds to a measurement value provided by the measurement unit based on a voltage drop over the shunt resistor having a nominal resistance value when powering the power stage at predefined working conditions and coupling the induction element with said reference load. In other words, the reference value may be indicative for the measurement value to be measured if the electronic components, specifically the shunt resistor, have component values (e.g. resistance values) equal to their nominal values (ideal electronic components without tolerances) and the induction element is coupled with said reference load. Thus, said reference value builds the fundamental reference (standard) for the calibration process.

According to embodiments, the correction value is the ratio between the measurement value and the reference value. After determining said correction value, the power control loop can be automatically calibrated by multiplying the currently received measurement value and the correction value.

According to a further aspect, the invention relates to a method for controlling the power transferred from one or at least two powers stage to one or at least two pieces of cookware in an induction hob, the induction hob comprising one induction element or at least two induction elements included in said one power stage or at least two power stages and one measurement unit or at least two measurement units, the method comprising the steps of :
- calculating one power value or at least two power values indicative for the power transferred to one piece or at least two pieces of cookware based on one measurement value or at least two measurement values and one correction value or at least two correction values, the one correction value or at least two correction values being stored in one or at least two storage entities; and
- controlling the power transferred to the one piece or at least two pieces of cookware based on the one power value or at least two power values.

According to a further aspect, the invention relates to a method for controlling the power transferred from a power stage to a piece of cookware in an induction hob, the induction hob comprising at least one induction element included in said power stage, a measurement unit and a control unit, the method comprising the steps of:
- powering the power stage thereby transferring power to a piece of cookware placed above the induction element;
- deriving a measurement value being indicative for the power transferred from the power stage to the piece of cookware by means of said measurement unit;
- calculating a power value indicative for the power transferred to a piece of cookware based on the measurement value and a correction value by means of the control unit, the correction value being stored in a storage entity being accessible by said control unit; and
- controlling the power transferred to the piece of cookware based on the power value.

According to a further aspect, the invention relates to a method for controlling the power transferred from one power stage or at least two power stages to one piece or at least two pieces of cookware in an induction hob, the induction hob comprising one induction element or at least two induction elements included in said power stage, one measurement unit or at least two measurement units and at least one control unit, the method comprising at least one or more of the steps of:
- powering the one power stage or at least two power stages thereby transferring power to the one piece or at least two pieces of cookware placed above the one induction element or at least two induction elements;
- deriving one measurement value or at least two measurement values being indicative for the power transferred from the one power stage or at least two power stages to the one piece or at least two pieces of cookware by means of said one measurement unit or at least two measurement units;
- calculating one power value or at least two power values indicative for the power transferred to one piece or at least two pieces of cookware based on the one measurement value or at least two measurement values and one correction value or at least two correction values by means of the at least one control unit, the one correction value or at least two correction values being stored in one or at least two storage entities being accessible by said at least one control unit; and
- controlling the power transferred to the one piece or at least two pieces of cookware based on the one or at least two power values.

Advantageously, by using the pre-calculated correction value, an automated and precise control of power transferred to the piece of cookware is achieved.

According to embodiments, the control unit is a software-based control unit comprising at least one processing entity, said processing entity modifying measurement values provided by the measurement circuit based on the correction value. In other words, during the operation of the induction hob a continuous modification of the measurement values is performed in order to derive a power value according to which the power stage is powered.

According to embodiments, the measurement value is derived based on the voltage drop at a shunt resistor being coupled with an arm of a bridge rectifier.

According to embodiments, the measurement value is derived based on the voltage drop at a shunt resistor being coupled with a switching element, specifically an insulated-gate bipolar transistor IGBT.

According to a further aspect, the invention relates to an induction hob comprising a power stage with at least one switching element for enabling an alternating current flow through an induction element, a control unit for controlling the current flow through the induction element and a measurement unit, the measurement unit being adapted to provide a measurement value to the control unit, the measurement value being indicative for the power transferred from the induction element to a piece of cookware placed above the induction element, wherein the control unit is coupled with a storage entity, the storage entity storing a correction value determined during a calibration routine, wherein the control unit is adapted to modify the measurement value based on the correction value and deriving a power value based on the modified measurement value and wherein the control unit is adapted to control the power transferred to the piece of cookware based on the power value.

According to a further aspect, the invention relates to an induction hob comprising one or at least two power stages with at least one switching element for enabling an alternating current flow through one or at least two induction elements, at least one control unit for controlling the current flow through the one or at least two induction elements and one or at least two measurement units, the one or at least two measurement units being adapted to provide one or at least two measurement values to the at least one control unit, the one or at least two measurement values being indicative for the power transferred from the one or at least two induction elements to one or at least two pieces of cookware placed above the one or at least two induction elements, wherein the at least one control unit is coupled with one or at least two storage entities, the one or at least two storage entities storing one or at least two correction values determined during a calibration routine, wherein the at least one control unit is adapted to modify the one or at least two measurement value based on the one or at least two correction values and deriving one or at least two power values based on the one or at least two modified measurement values and wherein the at least one control unit is adapted to control the power transferred to the one or at least two pieces of cookware based on the one or at least two power values.

Advantageously, by calibrating the induction hob during operation by using the pre-calculated correction value, the manufacturing costs can be reduced because cheap electronic components can be used and no manual calibration is necessary.

According to embodiments, the control unit is a software-based control unit comprising at least one processing entity, said processing entity being adapted to modify measurement values provided by the measurement circuit based on the correction value.

According to embodiments, the storage entity comprises a non-volatile data storage.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example schematic view of an induction hob;
- Fig. 2: shows an example schematic block diagram of units comprised within the induction hob;
- Fig. 3: shows an example circuit diagram of the bridge rectifier, the power stage and the driver unit according to a first embodiment;
- Fig. 4: shows an example circuit diagram of the bridge rectifier, the power stage and the driver unit according to a second embodiment;
- Fig. 5: illustrates an example method for calibrating a power control loop of an induction hob based on a flow chart;
- Fig. 6: illustrates an example method for controlling the power transferred to a piece of cookware in an induction hob; and
- Fig. 7: shows an example circuitry of the measurement unit.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

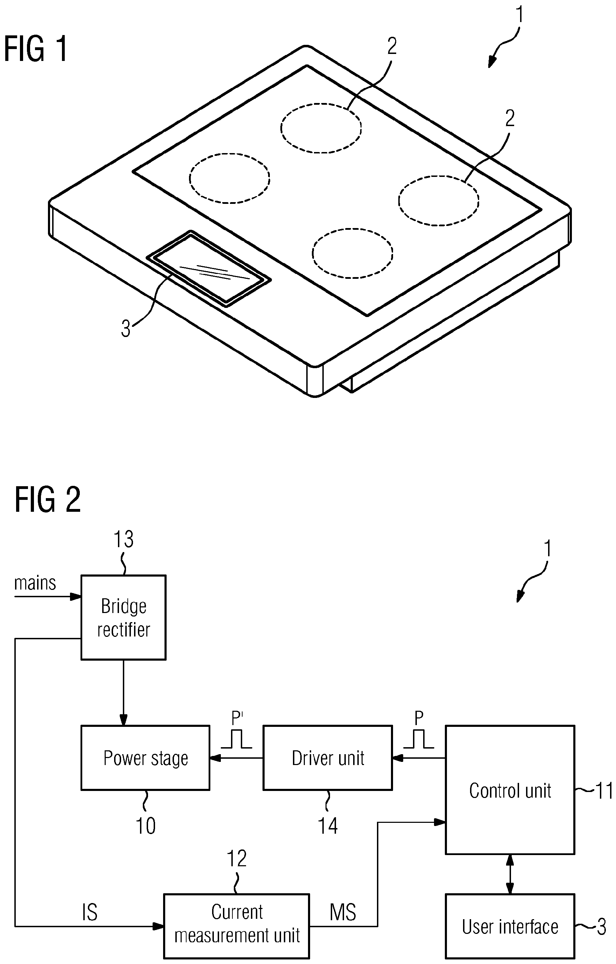

Fig. 1 shows a schematic illustration of an induction hob 1 according to the invention. The induction hob 1 may comprise multiple heating zones 2 preferably provided at a common hob plate. Each heating zone is correlated with at least one induction element placed beneath the hop plate. Said induction element may be, for example, an induction coil. The induction hob 1 further comprises a user interface 3 for receiving user input and/or providing information, specifically graphical information to the user.

Fig. 2 shows a schematic block diagram of an induction hob 1 being adapted to measure the current provided to one or more induction elements comprised within the induction hob 1. The induction hob 1 comprises a power stage 10, a control unit 11 and a user interface 3, said user interface 3 being coupled with the control unit 11 in order to provide information to the user and/or to receive information from the user via the user interface 3. Said control unit 11 is coupled with the power stage 10 in order to control the electrical power provided to the power stage 10, specifically to control the power provided to one or more induction elements comprised within the power stage 10.

Furthermore, the induction hob 1 may comprise a bridge rectifier 13, said bridge rectifier 13 being coupled with the power stage 10 for providing electrical power to the induction element of the power stage 10. The bridge rectifier 13 may be coupled with one or more phases of the mains supply network.

According to embodiments, the control unit 11 is coupled with the power stage 10 via a driver unit 14, said driver unit 14 being adapted to receive a pulsed electrical signal P by the control unit 11, modify said received pulsed electrical signal P and provide said modified pulsed electrical signal P' to the power stage 10. According to other embodiments, the control unit 11 may be directly coupled with the power stage 10, i.e. may provide the pulsed electrical signal P directly to the power stage 10. Said pulsed electrical signal P, respectively, modified pulsed electrical signal P' may be applied to a switching element comprised within the power stage 10 in order to enable an alternating current flow through the induction element.

In order to determine the power provided by the power stage 10 to a piece of cookware placed above the induction element of the power stage 10, the induction hob 1 comprises a measurement unit 12. According to an embodiment, the measurement unit 12 is coupled with the bridge rectifier 13 for receiving information regarding the amount of current flowing through the power stage 10. Thereby, the sum of power provided by all power stages 10 can be monitored because said power stages 10 may be powered by a single bridge rectifier 13. According to other embodiments, the measurement unit 12 is coupled with the power stage 10, specifically with the emitter path of the switching element comprised within the power stage 10 in order to receive information regarding the amount of current flowing through said switching element. So, due to the association of one or more switching elements to a certain power stage 10, the power provided by a certain power stage 10 to a piece of cookware can be determined.

The measurement unit 12 is configured to receive an input signal IS, said input signal IS being indicative for the power, specifically, for the amount of current being provided to the power stage 10 and derive a measurement signal MS based on the input signal IS. The measurement unit 12 is further coupled with the control unit 11 in order to provide said measurement signal MS to the control unit 11. The measurement unit 12 is configured to derive a measurement signal MS which can be directly processed by the control unit 11, i.e. the values of the measurement signal MS are adapted to the value range directly processible by the control unit 11. For example, the control unit 11 may be adapted to receive voltage values in the range of 0V to 5V. Therefore, the measurement unit 12 may be adapted to provide measurement signals MS with voltage values within upper-mentioned voltage range.

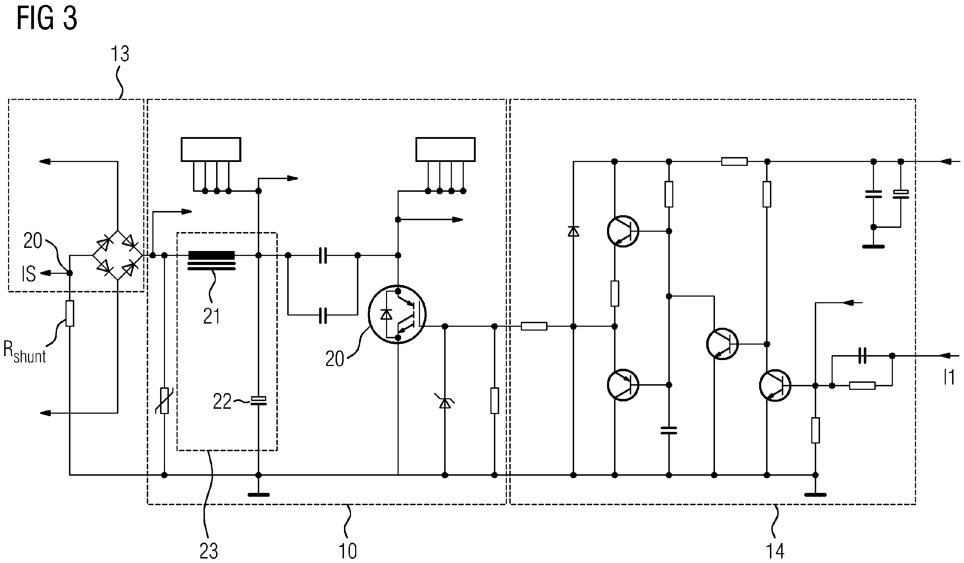

Fig. 3 shows the driver unit 14, the power stage 10 and the bridge rectifier 13 in closer detail. The driver unit 14 receives the pulsed electrical signal P at the input port I1. The driver unit 14 comprises an electrical circuitry configured to adapt the received pulsed electrical signal P according to the needs of the power stage 10. For example, the driver unit may amplify the received pulsed electrical signal P and/or may change the signal level of the pulsed electrical signal P by adding a certain offset voltage value to said received pulsed electrical signal P in order to derive said modified pulsed electrical signal P'. Said modified pulsed electrical signal P' may be provided to the gate of the switching element 20. Said switching element 20 may be, for example, an IGBT.

The collector of the switching element 20 may be coupled via a filtering circuitry (comprising one or more capacitors) to an oscillating circuit 23, said oscillating circuit 23 comprising the induction element 21 and a capacitor 22. The power stage 10 may comprise a quasi-resonant power stage architecture. On the opposite side of the capacitor 22, the induction element 21 may be coupled with the bridge rectifier 13 in order to power the oscillating circuit 23 by means of the mains supply network. By enabling a current flow through the switching element 20 using the modified pulsed electrical signal P', an alternating current flow through the induction element 21 is obtained which induces eddy currents in a piece of cookware placed above the induction element 21 thereby providing heat to said induction element 21.

In order to determine the power, specifically, the amount of current provided by the bridge rectifier 13 to the power stage 10, the induction hob 1 comprises a shunt resistor Rₛₕᵤₙₜ. Said shunt resistor Rₛₕᵤₙₜ is coupled on the one hand with the negative port of the bridge rectifier 13, i.e. the node of the bridge rectifier 13 at which the anodes of two adjacent diodes are directly coupled. On the other hand, the shunt resistor Rₛₕᵤₙₜ is further coupled with ground. The voltage drop over the shunt resistor Rₛₕᵤₙₜ is indicative for the electric current provided by the bridge rectifier 13 to the power stage 10 and might be used as input signal IS of the measurement unit 12.

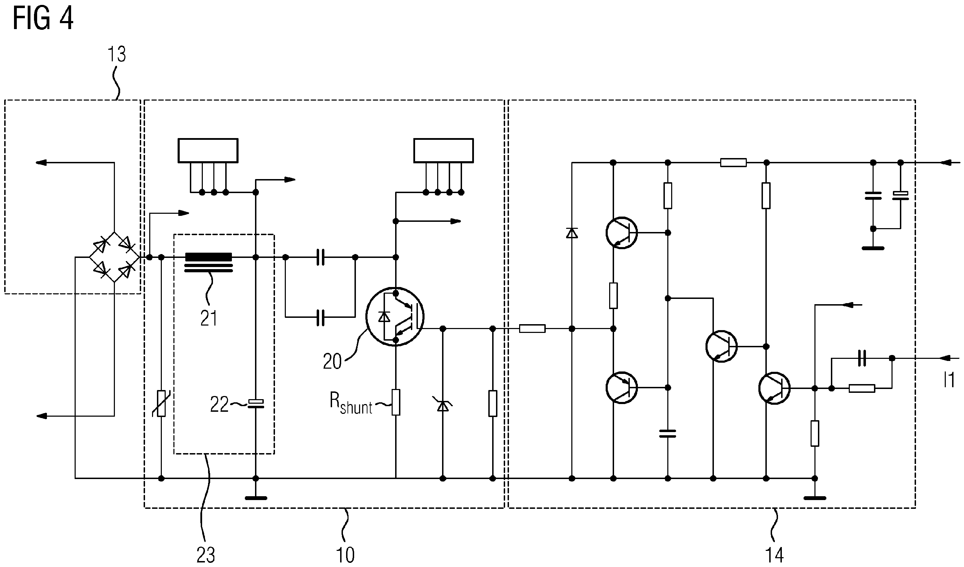

Fig. 4 shows a further embodiment of a circuitry including the driver unit 14, the power stage 10 and the bridge rectifier 13 similar to fig. 3. So, in the following only different technical features of the embodiment of fig. 4 are explained. Apart from that, reference is made to the description of technical features of the circuitry according to fig. 3. The main difference between the circuitries of fig. 3 and fig. 4 is the arrangement of the shunt resistor Rₛₕᵤₙₜ. According to the circuitry of Fig. 4, the shunt resistor Rₛₕᵤₙₜ is included in the emitter path of the switching element 20. Thereby, it is possible to determine the current (based on the voltage drop over the shunt resistor Rₛₕᵤₙₜ) flowing through the switching element 20. Said current value is a measure for the power provided from the induction element of the power stage 10 to the piece of cookware placed above said induction element. Due to the integration of the shunt resistor into the power stage, the power provided by each power stage can be determined separately.

In case that the tolerance of the nominal value of the shunt resistor Rₛₕᵤₙₜ is high (e.g. 5%), the power value derived by measuring the voltage drop over said shunt resistor Rₛₕᵤₙₜ also has a high error deviation, i.e. the determined power value is not precise but shows also a inaccuracy which may be not acceptable for power control purposes.

In further embodiments, the invention comprises one power stage 10, at least two power stages 10, at least three or at least four power stages 10, especially two, three, four or six power stages 10. Each power stage 10 includes one induction element 21 or at least two induction elements 21. Furthermore, the embodiments comprise one measurement unit 12 or at least two measurement units 12.

The induction hob 1 can comprise one driver unit 14, two or at least two driver units 14. The driver units can generate an output frequency between 10kHz and 100 kHz. The driver unit 14 or the driver units 14 can stimulate the induction element 1 or the induction elements 1 to oscillate.

The induction hob 1 can comprise one bridge rectifier 13, two or at least two bridge rectifiers 13. The induction hob 1 can comprise one filter circuit, two or at least two filter circuits.

The induction hob 1 can be operated with a one-phase electric power supply and/or with a two-phase electric power supply and/or with a three-phase electric power supply.

Each power stage 10 can be assigned to the same bridge rectifier 13 or to a separate bridge rectifier 13. At least two or at least three power stages 10 can be assigned to each bridge rectifier 13.

Each bridge rectifier 13, each power stage 10 or at least two power stages 10 can be assigned to the same electric phase or to a separate electric phase. Each bridge rectifier 13 and/or each power stage 10 is assigned to a filter circuit, so that preferably a filter circuit is arranged between the power supply and the rectifier. The filter circuit can prevent that distortions caused by the oscillation of the induction element 1 or the induction elements 1 are transferred into the external power supply system.

Each power stage 10 can comprise one IGBT, one IGBT-pair or at least two IGBTs. Each driver unit 14 preferably drives one or at least two power stages 10. A power stage 10 and an assigned driver unit 14 can form a generator or inverter, which generates an electromagnetic signal with a high frequency to heat at least one piece of cookware, especially a cooking vessel like a pot.

The induction elements 21 can be arranged in at least two rows and/or at least two columns, especially in a matrix arrangement.

The induction elements 21 can be covered by a surface, especially a glass ceramic surface or glass ceramic plate. The induction hob 1 is operated with an, especially touch sensitive, user interface, preferably arranged on the surface of the induction hob 1.

At least two power stages 10 and/or induction elements 21 can be coupled to a single cooking zone. Within a single cooking zone, preferably all power stages 10 and/or induction elements 21 are operated with the same power.

For calibrating one power control loop or at least two power control loops of the induction hob 1, one or more of the following steps are or can be performed, preferably in the described order:
- coupling the one induction element 1 or at least two induction elements 1 with one reference load or at least two reference loads;
- powering the one power stage 10 or at least two power stages 10 at predefined working conditions by means of said at least one control unit;
- deriving one measurement value or at least two measurement values being indicative for the power transferred from the one power stage 10 or at least two power stages 10 to one reference load or at least two reference loads by means of said one measurement unit 12 or at least two measurement units 12;
- providing the one measurement value or at least two measurement values to the at least one control unit;
- calculating one correction value or at least two correction values based on the one measurement value or at least two measurement values and one reference value or at least two reference values;
- storing one correction value or at least two correction values in one or at least two storage entities in order to modify measurement values provided by the one measurement unit 12 or at least two measurement units 12 based on the one correction value or at least two correction values when operating the induction hob 1.

For controlling the power transferred from one power stage 10 or at least two power stages 10 to one piece or at least two pieces of cookware in an induction hob 1, one or more of the following steps are or can be performed, preferably in the described order:
- powering the one power stage 10 or at least two power stages 10 thereby transferring power to the one piece or at least two pieces of cookware placed above the one or at least two induction elements 21;
- deriving one measurement value or at least two measurement values being indicative for the power transferred from the one power stage or at least two power stages to the one piece or at least two pieces of cookware by means of said one measurement unit or at least two measurement units;
- calculating one power value or at least two power values indicative for the power transferred to one piece or at least two pieces of cookware based on the one measurement value or at least two measurement values and one correction value or at least two correction values by means of the at least one control unit, the one correction value or at least two correction values being stored in at least one storage entity being accessible by said at least one control unit; and
- controlling the power transferred to the one piece or at least two pieces of cookware based on the one or at least two power values.

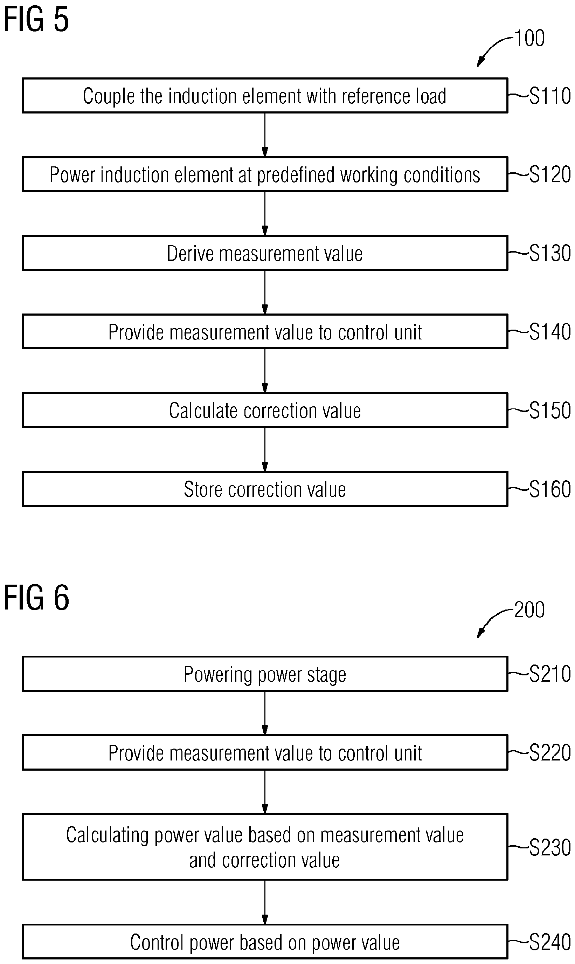

Fig. 5 illustrates a method 100 for running an induction hob calibration, specifically an automatic induction hob calibration. Said calibration may be a factory calibration performed in production plant after at least partially assembling the induction hob 1.

First, the induction element 21 is coupled with a reference load (S110). Said reference load may be made of a ferromagnetic material and may comprise predetermined load properties in order to constitute a calibration load. For example, the reference load may be placed on the heating zone 2 which is associated with said induction element 21.

After coupling the induction element 21 with the reference load, the power stage 10 including the induction element 21 coupled with the reference load is powered (S120). Specifically, the induction element 21 is powered at predefined working conditions by means of the control unit 11 and the driver unit 14. Said predefined working conditions may cause a preset transfer of electric power to the induction element 21. The predefined working conditions may specify a certain electrical signal P or a certain modified certain electrical signal P', for example, with a certain pulse duration and a certain pulse amplitude.

When powering the power stage 10 at predefined working conditions, a measurement value is derived, said measurement value being indicative for the power transferred from the induction element 21 to the reference load (S130). Said measurement value may be derived at a shunt resistor Rₛₕᵤₙₜ, i.e. the measurement value may be a voltage value indicating the voltage dropping at said shunt resistor Rₛₕᵤₙₜ. As shown in fig. 3 and 4, the shunt resistor Rₛₕᵤₙₜ may be included in the emitter path of the switching element 20 or may be coupled with the bridge rectifier 13. Alternatively, the measurement value may be obtained by the measurement unit 12 based on the voltage dropping at the shunt resistor.

Following up, the measurement value is provided to the control unit 11 (S140). The control unit 11 may start a calibration routine based on said measurement value. For example, the control unit 11 may compare the measurement value with a reference value. Said reference value may be stored in a storage entity coupled with the control unit 11. The reference value may be obtained as a measurement value if the real value of the shunt resistor Rₛₕᵤₙₜ is the nominal value of the shunt resistor Rₛₕᵤₙₜ, i.e. the resistance value of the shunt resistor Rₛₕᵤₙₜ does not deviate from its nominal value (error deviation 0%) and the induction element is coupled with the reference load.

Based on the measurement value and the reference value, the control unit 11 may calculate a correction value (S150). For example, the correction value may be the ratio between the measurement value and the reference value. Due to the proportional dependency of the measurement value from the resistance value of the shunt resistor Rₛₕᵤₙₜ, the correction value indicates the ratio between the real resistance value of the shunt resistor Rₛₕᵤₙₜ and its nominal value.

Finally, the correction value is stored in a storage entity coupled with the control unit 11 (S160). The control unit 11 may have access to said storage entity in order to read out said correction value from the storage entity and modify measurement values derived when operating the induction hob 1 (e.g. after putting the induction hob into operation by a user) based on said correction value. For example, a measurement value may be multiplied with the correction value in order to obtain a modified measurement value. Thereby, a calibration of the power control loop included in the induction hob is obtained.

It is worth mentioning that upper-mentioned calibration routine has to be performed for each shunt resistor Rₛₕᵤₙₜ separately, i.e. for each shunt resistor Rₛₕᵤₙₜ a correction value is determined and stored for calibrating the power measurement performed by using said shunt resistor Rₛₕᵤₙₜ.

Fig. 6 illustrates a method 200 for measuring the power transferred to a piece of cookware. First the power stage 10 is powered (S210) in order to transfer power from the induction element 21 to a piece of cookware placed above the induction element 21. During said powering, at least one measurement value is provided to the control unit 11 (S220). Said measurement value is indicative for the power transferred to the piece of cookware. Preferably, measurement values may be continuously provided to the control unit 11 in order to continuously monitor the power level. As already mentioned before, the measurement value may be derived at a shunt resistor Rₛₕᵤₙₜ, i.e. the measurement value may be the voltage dropping at said shunt resistor Rₛₕᵤₙₜ, or the measurement value may be provided by the measurement unit by adjusting the voltage measured at the shunt resistor.

The control unit may be adapted to calculate a power value based on said measurement value and a correction value (S230). The power value may be indicative for the actual power transferred from the power stage 10 to a piece of cookware. The correction value may have been obtained during calibrating routine and may be stored in a storage entity. For example, a modified measurement value may be calculated based on the measurement value. The modified measurement value may be, for example, the measurement value multiplied with/divided by the correction value. The power value may be calculated based on said modified measurement value.

Finally, said power value may be used for controlling the power transferred from the power stage 10 to the piece of cookware (S240). In other words, the power control of the induction hob 1 may use a modified measurement value for controlling the power transferred to the piece of cookware.

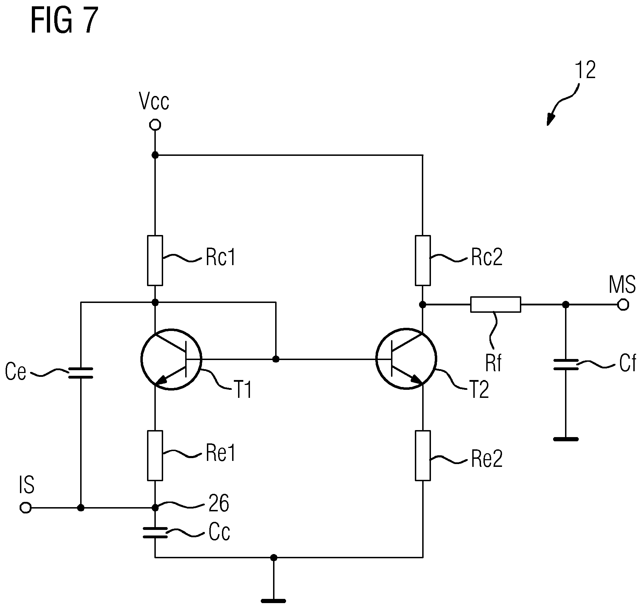

Fig. 7 shows an example circuitry comprised within the measurement unit 12. Said measurement unit circuitry may be used for the circuitries according to fig. 3 and 4. The measurement unit 12 solely comprises discrete components like resistors, capacitors and transistors, i.e. there are no integrated circuits, e.g. operational amplifiers etc. The measurement unit 12 comprises two transistors T1, T2 which are coupled in a current-mirror-circuit-like manner. The measurement unit 12 further comprises an input for receiving the input signal IS. Said input signal is received at the emitter path of the first transistor T1. The transistors may be, for example, bipolar transistors of an n-p-n type. The measurement unit 12 is powered by a supply voltage Vcc, wherein Vcc is, for example, 5V.

The collector of the first transistor T1 is coupled with the supply voltage Vcc via a first collector resistor Rc1. The emitter path of said first transistor T1 comprises a first emitter resistor Re1 and an emitter capacity Ce, wherein the first emitter resistor Re1 is coupled at a first contact with the emitter of the first transistor T1 and at a second contact with the emitter capacity Ce. The emitter capacity Ce is coupled at a further contact opposite to the first emitter resistor Re1 with ground. In other words, the first emitter resistor Re1 and the emitter capacity Ce are serially coupled within the emitter path of the first transistor T1.

The second transistor T2 also comprises a collector path and an emitter path. The collector path comprises a second collector resistor Rc2, the second collector resistor Rc2 being coupled with one resistor contact with the supply voltage Vcc and with the further contact with the collector of the second transistor T2. The measurement signal MS may be derived at the collector of the second transistor T2, i.e. at the node between the collector of the second transistor T2 and the second collector resistor Rc2. In the emitter path of the second transistor T2, a second emitter resistor Re2 is arranged wherein the emitter of the second transistor T2 is coupled with ground via said second emitter resistor Re2.

Furthermore, the bases or gates (in case of using field effect transistors) are directly coupled with each other, i.e. coupled via an electrical connection without any electrical device. In addition, there is also a direct electrical connection (without any electrical device) between the collector and the base or gate of the first transistor T1. Thereby, the voltage applied to the collector of the first transistor T1 is equal to the voltage applied to the bases or gates of the first and second transistor T1, T2.

For deriving the measurement signal MS based on the input signal IS, the input of the measurement unit 12 is coupled with node 25 between the bridge rectifier 13 and the power stage 10. Keeping in mind the flow direction of the electric current through the shunt resistor Rₛₕᵤₙₜ, the voltage U_{Rshunt} is negative. Thereby, also the input signal IS comprises a negative voltage with respect to ground level. So, in case that the current flowing through the bridge rectifier 13 is rising, the voltage U_{Rshunt} is also rising, i.e. the voltage at node 26 between the first emitter resistor Re1 and the emitter capacity Ce is increasing in the negative range. Thereby, also the current flowing through the first transistor T1 is rising.

Due to the upper-mentioned coupling of the first and second transistor T1, T2, the rising of the electric current flowing through the first transistor T1 may cause a rising current flow through the second transistor T2. The rising current flow through the second transistor T2 causes a rising voltage at the collector of said second transistor T2, i.e. the measurement signal MS also shows a rising voltage.

Conversely, a decreasing current flow through the bridge rectifier 13 may cause a reduced current flow through the second transistor T2 and therefore may cause a decreasing voltage at the collector of said second transistor T2, i.e. the measurement signal MS also shows a decreasing voltage.

Due to switching the switching element 20 based on the pulsed electrical signal P and the high currents flowing through the induction element 21, the current measurement within the measurement unit 12 is very noisy, i.e. the input signal IS may vary due to parasitic side effects which may worsen the measurement results provided by the measurement unit 12. In order to suppress said noise, the measurement unit 12 comprises several capacitors which suppress said input signal fluctuations and/or measurement signal fluctuations. At the input of the measurement unit 12 signal fluctuations of the input signal IS maybe suppressed by the emitter capacitor Ce comprised within the emitter path of the first transistor T1. As already mentioned above, the emitter capacitor Ce may be arranged between the first emitter resistor Re1 and ground. Thereby, the emitter capacitor Ce is connected in parallel to the shunt resistor Rₛₕᵤₙₜ. In addition, at the input of the measurement unit 12, a collector capacitor Cc may be provided which connects the input of the measurement unit 12 with the collector of the first transistor T1. Said emitter capacitor Ce and said collector capacitor Cc may lower signal fluctuations of the input signal IS.

Furthermore, the measurement unit 12 comprises a low pass filter 24, said low pass filter 24 being provided at the output of the measurement unit 12, i.e. the low pass filter is connected with the collector path of the second transistor T2. For example, the low pass filter 24 comprises a resistor Rf and a capacitor Cf forming a passive first-order low pass filter. Of course, also other low pass filters may be used. By means of said low pass filter 24, a smoothing of the measurement signal MS is achieved. In other words, the low pass filter 24 provides an averaged measurement signal MS thereby filtering out high-frequency signal fluctuations. For example, the low pass filter 24 may be chosen such that the variations of the measurement signal MS are very slow with respect to the timing of the control unit 11.

It should be noted that the description and drawings merely illustrate the principles of the proposed methods and systems.

### List of reference numerals

- 1: induction hob
- 2: heating zone
- 3: user interface
- 10: power stage
- 11: control unit
- 12: measurement unit
- 13: bridge rectifier
- 14: driver unit
- 20: switching element
- 21: induction element
- 22: capacitor
- 23: oscillating circuit
- 24: low-pass filter
- 25: node
- 26: node

- 100: calibration method
- S110-S160: calibration method steps
- 200: power measuring method
- S210-S240: power measuring method steps

- Cc: collector capacitor
- Ce: emitter capacitor
- Cf: capacitor
- I1: input
- IS: input signal
- MS: measurement signal
- P: pulsed electrical signal
- P': modified pulsed electrical signal
- Rc1: first collector resistor
- Rc2: second collector resistor
- Re1: first emitter resistor
- Re2: second emitter resistor
- Rf: resistor
- Rₛₕᵤₙₜ: shunt resistor
- T1: first transistor
- T2: second transistor
- U_{Rshunt}: voltage over Rₛₕᵤₙₜ
- Vcc: supply voltage

## Claims

1. Method for calibrating one or at least two power control loops of an induction hob (1), the induction hob (1) comprising one or at least two power stages (10) including one or at least two induction elements (21) and one or at least two measurement units (12), the method comprising the steps of:
- deriving one or at least two measurement values being indicative for the power transferred from the one or at least two power stages (10) to one or at least two reference loads by means of said one or at least two measurement units (12);
- storing one or at least two correction values in one or at least two storage entities in order to modify measurement values provided by the one or at least two measurement units (12) based on the one or at least two correction values when operating the induction hob (1).

2. Method for calibrating a power control loop of an induction hob (1) according to claim 1, the induction hob (1) comprising a power stage (10) including at least one induction element (21), a measurement unit (12) and a control unit (11), the method comprising the steps of:
- coupling the at least one induction element (21) with a reference load;
- powering the power stage (10) at predefined working conditions by means of said control unit (11);
- deriving a measurement value being indicative for the power transferred from the power stage (10) to the reference load by means of said measurement unit (12);
- providing the measurement value to the control unit (11) ;
- calculating a correction value based on the measurement value and a reference value;
- storing the correction value in a storage entity in order to modify measurement values provided by the measurement unit (12) based on the correction value when operating the induction hob (1).

3. Method according to claim 1 or 2,
wherein the method or the induction hob comprises one or more of the following features:
- the induction hob (1) comprising one, at least two, at least three or at least four power stages (10), especially two, three, four or six power stages (10) and/or
- the induction hob (1) comprising one, two or at least two driver units (14), the driver units preferably generating an output frequency between 10kHz and 100 kHz and/or
- the induction hob (1) comprising one, two or at least two bridge rectifiers (13) and/or
- the induction hob (1) comprising one, two or at least two filter circuits and/or
- wherein the induction hob (1) is operated with a one-phase electric power supply and/or with a two-phase electric power supply and/or with a three-phase electric power supply and/or
- wherein each power stage (10) is assigned to the same bridge rectifier (13) or to a separate bridge rectifier (13) and/or
- wherein at least two or at least three power stages (10) are assigned to each bridge rectifier (13) and/or
- wherein each bridge rectifier (13), each power stage (10) or at least two power stages (10) is/are assigned to the same electric phase or to a separate electric phase and/or
- wherein each bridge rectifier (13) and/or each power stage (10) is assigned to a filter circuit and/or
- wherein each power stage (10) comprises one IGBT, one IGBT-pair or at least two IGBTs and/or
- wherein each driver unit (14) drives one or at least two power stages (10) and/or
- wherein a power stage (10) and an assigned driver unit (14) form a generator or inverter, which generates an electromagnetic signal with a high frequency to heat at least one piece of cookware, especially a cooking vessel like a pot and/or
- wherein the induction elements (21) are arranged in at least two rows and/or at least two columns, especially in a matrix arrangement and/or
- wherein the induction elements (21) are covered by a surface, especially a glass ceramic surface, and/or
- wherein the induction hob (1) is operated with an, especially touch sensitive, user interface, preferably arranged on the surface and/or
- wherein at least two power stages (10) and/or induction elements (21) can be coupled to a single cooking zone.

4. Method according to claim 1, 2 or 3, wherein the measurement value is derived based on the voltage drop at a shunt resistor (Rₛₕᵤₙₜ) being coupled with an arm of a bridge rectifier (13) and/or wherein the measurement value is derived based on the voltage drop at a shunt resistor (Rₛₕᵤₙₜ) being coupled with a switching element (20), specifically an insulated-gate bipolar transistor IGBT.

5. Method according to claim 4, wherein the voltage drop measured at a shunt resistor (Rₛₕᵤₙₜ) is received by the measurement unit (12), the measurement unit (12) providing the measurement value based on said voltage drop.

6. Method according to anyone of the preceding claims, wherein the reference value is stored in a storage entity, the storage entity being accessible by the control unit (11) and/or wherein the reference value corresponds to a measurement value provided by the measurement unit (12) based on a voltage drop over the shunt resistor (Rₛₕᵤₙₜ) having a nominal resistance value when powering the power stage (10) at predefined working conditions and coupling the induction element (21) with said reference load.

7. Method according to anyone of the preceding claims, wherein the correction value is the ratio between the measurement value and the reference value.

8. Method for controlling the power transferred from one or at least two power stages (10) to one or at least two pieces of cookware in an induction hob (1), the induction hob (1) comprising one or at least two induction elements (21) included in said one or at least two power stages (10) and one or at least two measurement units (12), the method comprising the steps of:
- calculating one or at least two power values indicative for the power transferred to at least one piece of cookware based on one or at least two measurement values and one or at least two correction values, the one or at least two correction values being stored in one or at least two storage entities; and
- controlling the power transferred to the one or at least two pieces of cookware based on the one or at least two power values.

9. Method for controlling the power transferred from a power stage (10) to a piece of cookware in an induction hob (1) according to claim 8, the induction hob (1) comprising at least one induction element (21) included in said power stage (10), a measurement unit (12) and a control unit (11), the method comprising the steps of:
- powering the power stage (10) thereby transferring power to a piece of cookware placed above the induction element (21);
- deriving a measurement value being indicative for the power transferred from the power stage (10) to the piece of cookware by means of said measurement unit (12) ;
- calculating a power value indicative for the power transferred to a piece of cookware based on the measurement value and a correction value by means of the control unit (11), the correction value being stored in a storage entity being accessible by said control unit; and
- controlling the power transferred to the piece of cookware based on the power value.

10. Method according to claim 8 or 9,
- the induction hob (1) comprising one, at least two, at least three or at least four power stages (10), especially two, three, four or six power stages (10) and/or
- the induction hob (1) comprising one, two or at least two driver units (14), the driver units preferably generating an output frequency between 10kHz and 100 kHz and/or
- the induction hob (1) comprising one, two or at least two bridge rectifiers (13) and/or
- the induction hob (1) comprising one, two or at least two filter circuits and/or
- wherein the induction hob (1) is operated with a one-phase electric power supply and/or with a two-phase electric power supply and/or with a three-phase electric power supply and/or
- wherein each power stage (10) is assigned to the same bridge rectifier (13) or to a separate bridge rectifier (13) and/or
- wherein at least two or at least three power stages (10) are assigned to each bridge rectifier (13) and/or
- wherein each bridge rectifier (13), each power stage (10) or at least two power stages (10) is/are assigned to the same electric phase or to a separate electric phase and/or
- wherein each bridge rectifier (13) and/or each power stage (10) is assigned to a filter circuit and/or
- wherein each power stage (10) comprises one IGBT, one IGBT-pair or at least two IGBTs and/or
- wherein each driver unit (14) drives one or at least two power stages (10) and/or
- wherein a power stage (10) and an assigned driver unit (14) form a generator or inverter, which generates an electromagnetic signal with a high frequency to heat at least one piece of cookware, especially a cooking vessel like a pot and/or
- wherein the induction elements (21) are arranged in at least two rows and/or at least two columns, especially in a matrix arrangement and/or
- wherein the induction elements (21) are covered by a surface, especially a glass ceramic surface and/or
- wherein the induction hob (1) is operated with an, especially touch sensitive, user interface, preferably arranged on the surface and/or
- wherein at least two power stages (10) and/or induction elements (21) can be coupled to a single cooking zone.

11. Method according to claim 8, 9 or 10, wherein the control unit (11) is a software-based control unit comprising at least one processing entity, said processing entity modifying measurement values provided by the measurement circuit based on the correction value.

12. Method according to one or more of claims 8 to 11, wherein the measurement value is derived based on the voltage drop at a shunt resistor (Rₛₕᵤₙₜ) being coupled with an arm of a bridge rectifier (13) and/or wherein the measurement value is derived based on the voltage drop at a shunt resistor (Rₛₕᵤₙₜ) being coupled with a switching element (20), specifically an insulated-gate bipolar transistor IGBT.

13. Method according to claim 12, wherein the voltage drop measured at a shunt resistor (Rₛₕᵤₙₜ) is received by the measurement unit (12), the measurement unit (12) providing the measurement value based on said voltage drop.

14. Induction hob comprising a power stage (10) with at least one switching element (20) for enabling an alternating current flow through an induction element (21), a control unit (11) for controlling the current flow through the induction element (21) and a measurement unit (12), the measurement unit (12) being adapted to provide a measurement value to the control unit, the measurement value being indicative for the power transferred from the induction element (21) to a piece of cookware placed above the induction element (21), wherein the control unit (11) is coupled with a storage entity, the storage entity storing a correction value determined during a calibration routine, wherein the control unit (11) is adapted to modify the measurement value based on the correction value and deriving a power value based on the modified measurement value and wherein the control unit (11) is adapted to control the power transferred to the piece of cookware based on the power value.

15. Induction hob according to claim 14, comprising one or at least two power stages (10) with at least one switching element (20) for enabling an alternating current flow through one or at least two induction elements (21), at least one control unit (11) for controlling the current flow through the one or at least two induction elements (21) and one or at least two measurement units, the one or at least two measurement units being adapted to provide one or at least two measurement values to the at least one control unit (11), the one or at least two measurement values being indicative for the power transferred from the one or at least two induction elements (21) to one or at least two pieces of cookware placed above the one or at least two induction elements (21), wherein the at least one control unit (11) is coupled with one at least two storage entities, the one or at least two storage entities storing one or at least two correction values determined during at least one calibration routine, wherein the at least one control unit (11) is adapted to modify the one or at least two measurement values based on the one or at least two correction values and deriving one or at least two power values based on the one or at least two modified measurement values and wherein the at least one control unit (11) is adapted to control the power transferred to the one or at least two piece of cookware based on the one or at least two power values.

16. Induction hob according to claim 15, wherein the control unit (11) is a software-based control unit comprising at least one processing entity, said processing entity being adapted to modify measurement values provided by the measurement circuit based on the correction value and/or wherein the storage entity comprises a non-volatile data storage.

## Patentansprüche

1. Verfahren zum Kalibrieren einer oder mindestens zweier Leistungssteuerschleifen einer Induktionskochfläche (1), wobei die Induktionskochfläche (1) eine oder mindestens zwei Leistungsstufen (10), die ein oder mindestens zwei Induktionselemente (21) enthalten, und eine oder mindestens zwei Messeinheiten (12) umfasst, wobei das Verfahren die folgenden Schritte umfasst:
- Ableiten eines oder mindestens zweier Messwerte, die die Leistung angeben, die von der einen oder den mindestens zwei Leistungsstufen (10) an eine oder mindestens zwei Referenzlasten übertragen wird, mittels der einen oder der mindestens zwei Messeinheiten (12);
- Speichern eines oder mindestens zweier Korrekturwerte in einem oder mindestens zwei Speicherelementen, um die Messwerte, die durch die eine oder die mindestens zwei Messeinheiten (12) bereitgestellt werden, auf der Grundlage des einen oder der mindestens zwei Korrekturwerte zu ändern, wenn die Induktionskochfläche (1) betrieben wird.

2. Verfahren zum Kalibrieren einer Leistungssteuerschleife einer Induktionskochfläche (1) nach Anspruch 1, wobei die Induktionskochfläche (1) eine Leistungsstufe (10) umfasst, die mindestens ein Induktionselement (21), eine Messeinheit (12) und eine Steuereinheit (11) enthält, wobei das Verfahren die folgenden Schritte umfasst:
- Koppeln des mindestens einen Induktionselements (21) mit einer Referenzlast;
- Versorgen der Leistungsstufe (10) mit Energie unter vorgegebenen Arbeitsbedingungen mittels der Steuereinheit (11);
- Ableiten eines Messwertes, der die Leistung angibt, die von der Leistungsstufe (10) zur Referenzlast übertragen wird, mittels der Messeinheit (12);
- Bereitstellen des Messwertes für die Steuereinheit (11);
- Berechnen eines Korrekturwertes auf der Grundlage des Messwertes und eines Referenzwertes;
- Speichern des Korrekturwertes in einem Speicherelement, um die Messwerte, die durch die Messeinheit (12) bereitgestellt werden, auf der Grundlage des Korrekturwertes zu ändern, wenn die Induktionskochfläche (1) betrieben wird.

3. Verfahren nach Anspruch 1 oder 2,
wobei das Verfahren oder die Induktionskochfläche eines oder mehrere der folgenden Merkmale umfassen:
- die Induktionskochfläche (1) umfasst eine, mindestens zwei, mindestens drei oder mindestens vier Leistungsstufen (10), insbesondere zwei, drei, vier oder sechs Leistungsstufen (10); und/oder
- die Induktionskochfläche (1) umfasst eine, zwei oder mindestens zwei Ansteuereinheiten (14), wobei die Ansteuereinheiten vorzugsweise eine Ausgangsfrequenz im Bereich von 10 kHz bis 100 kHz erzeugen; und/oder
- die Induktionskochfläche (1) umfasst einen, zwei oder mindestens zwei Brückengleichrichter (13); und/oder
- die Induktionskochfläche (1) umfasst eine, zwei oder mindestens zwei Filterschaltungen; und/oder
- wobei die Induktionskochfläche (1) mit einer einphasigen elektrischen Energieversorgung und/oder mit einer zweiphasigen elektrischen Energieversorgung und/oder mit einer dreiphasigen elektrischen Energieversorgung betrieben wird; und/oder
- wobei jede Leistungsstufe (10) demselben Brückengleichrichter (13) oder einem getrennten Brückengleichrichter (13) zugeordnet ist; und/oder
- wobei jedem Brückengleichrichter (13) mindestens zwei oder mindestens drei Leistungsstufen (10) zugeordnet sind; und/oder
- wobei jeder Brückengleichrichter (13), jede Leistungsstufe (10) oder mindestens zwei Leistungsstufen (10) derselben elektrischen Phase oder einer getrennten elektrischen Phase zugeordnet ist bzw. sind; und/oder
- wobei jeder Brückengleichrichter (13) und/oder jede Leistungsstufe (10) einer Filterschaltung zugeordnet ist; und/oder
- wobei jede Leistungsstufe (10) einen IGBT, ein IGBT-Paar oder mindestens zwei IGBT umfasst; und/oder
- wobei jede Ansteuereinheit (14) eine oder mindestens zwei Leistungsstufen (10) ansteuert; und/oder
- wobei ein Leistungsstufe (10) und eine zugeordnete Ansteuereinheit (14) einen Generator oder einen Wechselrichter bilden, der ein elektromagnetisches Signal mit einer hohen Frequenz erzeugt, um mindestens ein Stück Kochgeschirr, insbesondere ein Kochgefäß wie einen Topf, zu erwärmen; und/oder
- wobei die Induktionselemente (21) in mindestens zwei Zeilen und/oder in mindestens zwei Spalten, insbesondere in einer Matrixanordnung, angeordnet sind; und/oder
wobei die Induktionselemente (21) durch eine Oberfläche, insbesondere eine Glaskeramikoberfläche, abgedeckt sind; und/oder
- wobei die Induktionskochfläche (1) mit einer, insbesondere berührungsempfindlichen, Anwenderschnittstelle bedient wird, die vorzugsweise auf der Oberfläche angeordnet ist; und/oder
- wobei mindestens zwei Leistungsstufen (10) und/oder Induktionselemente (21) zu einem einzigen Kochfeld gekoppelt werden können.

4. Verfahren nach Anspruch 1, 2 oder 3, wobei der Messwert auf der Grundlage des Spannungsabfalls an einem Nebenschlusswiderstand (Rₛₕᵤₙₜ) abgeleitet wird, der mit einem Zweig eines Brückengleichrichters (13) gekoppelt ist, und/oder wobei der Messwert auf der Grundlage des Spannungsabfalls an einem Nebenschlusswiderstand (Rₛₕᵤₙₜ) abgeleitet wird, der mit einem Schaltelement (20), insbesondere mit einem bipolaren Transistor mit isoliertem Gate, IGBT, gekoppelt ist.

5. Verfahren nach Anspruch 4, wobei der Spannungsabfall, der an einem Nebenschlusswiderstand (Rₛₕᵤₙₜ) gemessen wird, von der Messeinheit (12) empfangen wird, wobei die Messeinheit (12) den Messwert auf der Grundlage des Spannungsabfalls bereitstellt.

6. Verfahren nach einem der vorhergehenden Ansprüche, wobei der Referenzwert in einem Speicherelement gespeichert wird, wobei das Speicherelement durch die Steuereinheit (11) zugreifbar ist und/oder wobei der Referenzwert einem Messwert entspricht, der durch die Messeinheit (12) auf der Grundlage eines Spannungsabfalls über dem Nebenschlusswiderstand (Rₛₕᵤₙₜ) bereitgestellt wird, der einen Nennwiderstandswert aufweist, wenn die Leistungsstufe (10) unter vorgegebenen Arbeitsbedingungen mit Energie versorgt wird, und das Induktionselement (21) mit der Referenzlast koppelt.

7. Verfahren nach einem der vorhergehenden Ansprüche, wobei der Korrekturwert das Verhältnis zwischen dem Messwert und dem Referenzwert ist.

8. Verfahren zum Steuern der Leistung, die von einer oder mindestens zwei Leistungsstufen (10) in einer Induktionskochfläche (1) zu einem oder mindestens zwei Stücken Kochgeschirr übertragen wird, wobei die Induktionskochfläche (1) ein oder mindestens zwei Induktionselemente (21), die in der einen oder den mindestens zwei Leistungsstufen (10) enthalten sind, und eine oder mindestens zwei Messeinheiten (12) umfasst, wobei das Verfahren die folgenden Schritte umfasst:
- Berechnen von einem oder mindestens zwei Leistungswerten, die die Leistung angeben, die zu dem mindestens einen Stück Kochgeschirr übertragen wird, auf der Grundlage von einem oder mindestens zwei Messwerten und einem oder mindestens zwei Korrekturwerten, wobei der eine oder die mindestens zwei Korrekturwerte in einem oder mindestens zwei Speicherelementen gespeichert sind; und
- Steuern der Leistung, die zu dem einen oder den mindestens zwei Stücken Kochgeschirr übertragen wird, auf der Grundlage des einen oder der mindestens zwei Leistungswerte.

9. Verfahren zum Steuern der Leistung, die von einer Leistungsstufe (10) in einer Induktionskochfläche (1) zu einem Stück Kochgeschirr übertragen wird, nach Anspruch 8, wobei die Induktionskochfläche (1) mindestens ein Induktionselement (21), das in der Leistungsstufe (10) enthalten ist, eine Messeinheit (12) und eine Steuereinheit (11) umfasst, wobei das Verfahren die folgenden Schritte umfasst:
- Versorgen der Leistungsstufe (10) mit Energie, wodurch Leistung zu einem Stück Kochgeschirr übertragen wird, das über dem Induktionselement (21) angeordnet ist;
- Ableiten eines Messwertes, der die Leistung angibt, die von der Leistungsstufe (10) zu dem Stück Kochgeschirr übertragen wird, mittels der Messeinheit (12) ;
- Berechnen eines Leistungswertes, der die Leistung angibt, die zu einem Stück Kochgeschirr übertragen wird, auf der Grundlage des Messwertes und eines Korrekturwertes mittels der Steuereinheit (11), wobei der Korrekturwert in einem Speicherelement gespeichert ist, das durch die Steuereinheit zugreifbar ist; und
- Steuern der Leistung, die zu dem Stück Kochgeschirr übertragen wird, auf der Grundlage des Leistungswertes.

10. Verfahren nach Anspruch 8 oder 9,
- wobei die Induktionskochfläche (1) eine, mindestens zwei, mindestens drei oder mindestens vier Leistungsstufen (10), insbesondere zwei, drei, vier oder sechs Leistungsstufen (10), umfasst; und/oder
- wobei die Induktionskochfläche (1) eine, zwei oder mindestens zwei Ansteuereinheiten (14) umfasst, wobei die Ansteuereinheiten vorzugsweise eine Ausgangsfrequenz im Bereich von 10 kHz bis 100 kHz erzeugen; und/oder
- wobei die Induktionskochfläche (1) einen, zwei oder mindestens zwei Brückengleichrichter (13) umfasst; und/oder
- wobei die Induktionskochfläche (1) eine, zwei oder mindestens zwei Filterschaltungen umfasst; und/oder
- wobei die Induktionskochfläche (1) mit einer einphasigen elektrischen Energieversorgung und/oder mit einer zweiphasigen elektrischen Energieversorgung und/oder mit einer dreiphasigen elektrischen Energieversorgung betrieben wird; und/oder
- wobei jede Leistungsstufe (10) demselben Brückengleichrichter (13) oder einem getrennten Brückengleichrichter (13) zugeordnet ist; und/oder
- wobei jedem Brückengleichrichter (13) mindestens zwei oder mindestens drei Leistungsstufen (10) zugeordnet sind; und/oder
- wobei jeder Brückengleichrichter (13), jede Leistungsstufe (10) oder mindestens zwei Leistungsstufen (10) derselben elektrischen Phase oder einer getrennten elektrischen Phase zugeordnet ist bzw. sind; und/oder
- wobei jeder Brückengleichrichter (13) und/oder jede Leistungsstufe (10) einer Filterschaltung zugeordnet ist; und/oder
- wobei jede Leistungsstufe (10) einen IGBT, ein IGBT-Paar oder mindestens zwei IGBT umfasst; und/oder
- wobei jede Ansteuereinheit (14) eine oder mindestens zwei Leistungsstufen (10) ansteuert; und/oder
- wobei ein Leistungsstufe (10) und eine zugeordnete Ansteuereinheit (14) einen Generator oder einen Wechselrichter bilden, der ein elektromagnetisches Signal mit einer hohen Frequenz erzeugt, um mindestens ein Stück Kochgeschirr, insbesondere ein Kochgefäß wie einen Topf, zu erwärmen; und/oder
- wobei die Induktionselemente (21) in mindestens zwei Zeilen und/oder in mindestens zwei Spalten, insbesondere in einer Matrixanordnung, angeordnet sind; und/oder
wobei die Induktionselemente (21) durch eine Oberfläche, insbesondere eine Glaskeramikoberfläche, abgedeckt sind; und/oder
- wobei die Induktionskochfläche (1) mit einer insbesondere berührungsempfindlichen Anwenderschnittstelle bedient wird, die vorzugsweise auf der Oberfläche angeordnet ist; und/oder
- wobei mindestens zwei Leistungsstufen (10) und/oder Induktionselemente (21) zu einem einzigen Kochfeld gekoppelt werden können.

11. Verfahren nach Anspruch 8, 9 oder 10, wobei die Steuereinheit (11) eine Steuereinheit auf der Grundlage von Software ist, die mindestens ein Verarbeitungselement umfasst, wobei das Verarbeitungselement die Messwerte, die durch die Messschaltung bereitgestellt werden, auf der Grundlage des Korrekturwertes ändert.

12. Verfahren nach einem oder mehreren der Ansprüche 8 bis 11, wobei der Messwert auf der Grundlage des Spannungsabfalls an einem Nebenschlusswiderstand (Rₛₕᵤₙₜ) abgeleitet wird, der mit einem Zweig eines Brückengleichrichters (13) gekoppelt ist, und/oder wobei der Messwert auf der Grundlage des Spannungsabfalls an einem Nebenschlusswiderstand (Rₛₕᵤₙₜ) abgeleitet wird, der mit einem Schaltelement (20), insbesondere mit einem Bipolartransistor mit isoliertem Gate, IGBT, gekoppelt ist.

13. Verfahren nach Anspruch 12, wobei der Spannungsabfall, der an einem Nebenschlusswiderstand (Rₛₕᵤₙₜ) gemessen wird, von der Messeinheit (12) empfangen wird, wobei die Messeinheit (12) den Messwert auf der Grundlage des Spannungsabfalls bereitstellt.

14. Induktionskochfläche, die eine Leistungsstufe (10) mit mindestens einem Schaltelement (20) zum Aktivieren eines Wechselstromflusses durch ein Induktionselement (21), eine Steuereinheit (11) zum Steuern des Stromflusses durch das Induktionselement (21) und eine Messeinheit (12) umfasst, wobei die Messeinheit (12) ausgelegt ist, für die Steuereinheit einen Messwert bereitzustellen, wobei der Messwert die Leistung angibt, die vom Induktionselement (21) zu einem Stück Kochgeschirr übertragen wird, das über dem Induktionselement (21) angeordnet ist, wobei die Steuereinheit (11) mit einem Speicherelement gekoppelt ist, wobei in dem Speicherelement ein Korrekturwert gespeichert ist, der während einer Kalibrierungsroutine bestimmt worden ist, wobei die Steuereinheit (11) ausgelegt ist, den Messwert auf der Grundlage des Korrekturwertes zu ändern, und auf der Grundlage des geänderten Messwertes einen Leistungswert ableitet, und wobei die Steuereinheit (11) ausgelegt ist, die Leistung, die zu dem Stück Kochgeschirr übertragen wird, auf der Grundlage des Leistungswertes zu berechnen.

15. Induktionskochfläche, die eine oder mindestens zwei Leistungsstufen (10) mit mindestens einem Schaltelement (20) zum Aktivieren eines Wechselstromflusses durch ein oder mindestens zwei Induktionselemente (21), mindestens eine Steuereinheit (11) zum Steuern des Stromflusses durch das eine oder die mindestens zwei Induktionselemente (21) und eine oder mindestens zwei Messeinheiten umfasst, wobei die eine oder die mindestens zwei Messeinheiten ausgelegt sind, für die mindestens eine Steuereinheit (11) einen oder mindestens zwei Messwerte bereitzustellen, wobei der eine oder die mindestens zwei Messwerte die Leistung angeben, die von dem einen oder den mindestens zwei Induktionselementen (21) zu einem oder mindestens zwei Stücken Kochgeschirr übertragen wird, die über dem einen oder den mindestens zwei Induktionselementen (21) angeordnet sind, wobei die mindestens eine Steuereinheit (11) mit einem oder mindestens zwei Speicherelementen gekoppelt ist, wobei in dem einen oder den mindestens zwei Speicherelementen ein oder mindestens zwei Korrekturwerte gespeichert sind, die während mindestens einer Kalibrierungsroutine bestimmt worden sind, wobei die mindestens eine Steuereinheit (11) ausgelegt ist, den einen oder die mindestens zwei Messwerte auf der Grundlage des einen oder der mindestens zwei Korrekturwerte zu ändern, und auf der Grundlage des einen oder der mindestens zwei geänderten Messwerte einen oder mindestens zwei Leistungswerte ableitet, und wobei die mindestens eine Steuereinheit (11) ausgelegt ist, die Leistung, die zu dem einen oder den mindestens zwei Stücken Kochgeschirr übertragen wird, auf der Grundlage des einen oder der mindestens zwei Leistungswerte zu berechnen.

16. Induktionskochfläche nach Anspruch 15, wobei die Steuereinheit (11) eine Steuereinheit auf der Grundlage von Software ist, die mindestens ein Verarbeitungselement umfasst, wobei das Verarbeitungselement ausgelegt ist, die Messwerte, die durch die Messschaltung bereitgestellt werden, auf der Grundlage des Korrekturwertes zu ändern und/oder wobei das Speicherelement einen nichtflüchtigen Datenspeicher umfasst.

## Revendications

1. Procédé d'étalonnage d'une ou d'au moins deux boucles de commande de puissance d'une plaque de cuisson à induction (1), la plaque de cuisson à induction (1) comprenant un ou au moins deux étages de puissance (10) comportant un ou au moins deux éléments d'induction (21) et une ou au moins deux unités de mesure (12), le procédé comprenant les étapes de :
- dérivation d'une ou d'au moins deux valeurs de mesure indiquant la puissance transférée à partir des un ou au moins deux étages de puissance (10) à une ou au moins deux charges de référence au moyen desdites une ou au moins deux unités de mesure (12) ;
- mémorisation d'une ou d'au moins deux valeurs de correction dans une ou au moins deux entités de mémorisation afin de modifier des valeurs de mesure fournies par les une ou au moins deux unités de mesure (12) sur la base des une ou au moins deux valeurs de correction lors du fonctionnement de la plaque de cuisson à induction (1).

2. Procédé d'étalonnage d'une boucle de commande de puissance d'une plaque de cuisson à induction (1) selon la revendication 1, la plaque de cuisson à induction (1) comprenant un étage de puissance (10) comportant au moins un élément d'induction (21), une unité de mesure (12) et une unité de commande (11), le procédé comprenant les étapes de :
- couplage de l'au moins un élément d'induction (21) à une charge de référence ;
- alimentation de l'étage de puissance (10) à des conditions de travail prédéfinies au moyen de ladite unité de commande (11) ;
- dérivation d'une valeur de mesure indiquant la puissance transférée à partir de l'étage de puissance (10) à la charge de référence au moyen de ladite unité de mesure (12) ;
- fourniture de la valeur de mesure à l'unité de commande (11) ;
- calcul d'une valeur de correction sur la base de la valeur de mesure et d'une valeur de référence ;
- mémorisation de la valeur de correction dans une entité de mémoire afin de modifier des valeurs de mesure fournies par l'unité de mesure (12) sur la base de la valeur de correction lors du fonctionnement de la plaque de cuisson à induction (1).

3. Procédé selon la revendication 1 ou 2,
le procédé ou la plaque de cuisson à induction comprenant une ou plusieurs des caractéristiques suivantes :
- la plaque de cuisson à induction (1) comprend un, au moins deux, au moins trois ou au moins quatre étages de puissance (10), spécialement deux, trois, quatre ou six étages de puissance (10) et/ou
- la plaque de cuisson à induction (1) comprend une, deux ou au moins deux unités d'excitation (14), les unités d'excitation générant de préférence une fréquence de sortie entre 10 kHz et 100 kHz et/ou
- la plaque de cuisson à induction (1) comprend un, deux ou au moins deux redresseurs en pont (13) et/ou
- la plaque de cuisson à induction (1) comprend un, deux ou au moins deux circuits de filtre et/ou
- dans lequel la plaque de cuisson à induction (1) est actionnée avec une alimentation électrique monophasée et/ou une alimentation électrique biphasée et/ou une alimentation électrique triphasée et/ou
- dans lequel chaque étage de puissance (10) est assigné au même redresseur en pont (13) ou à un redresseur en pont séparé (13) et/ou
- dans lequel au moins deux ou au moins trois étages de puissance (10) sont assignés à chaque redresseur en pont (13) et/ou
- dans lequel chaque redresseur en pont (13), chaque étage de puissance (10) ou au moins deux étages de puissance (10) est/sont assignés à la même phase électrique ou à une phase électrique séparée et/ou
- dans lequel chaque redresseur en pont (13) et/ou chaque étage de puissance (10) est assigné à un circuit de filtre et/ou
- dans lequel chaque étage de puissance (10) comprend un IGBT, une paire d'IGBT ou au moins deux IGBT et/ou
- dans lequel chaque unité d'excitation (14) excite un ou au moins deux étages de puissance (10) et/ou
- dans lequel un étage de puissance (10) et une unité d'excitation assignée (14) forment un générateur ou onduleur, lequel génère un signal électromagnétique à haute fréquence pour chauffer au moins un élément de batterie de cuisine, spécialement un récipient de cuisson tel qu'une marmite et/ou
- dans lequel les éléments d'induction (21) sont disposés en au moins deux rangées et/ou au moins deux colonnes, spécialement en une disposition matricielle et/ou
- dans lequel les éléments d'induction (21) sont recouverts par une surface, spécialement une surface en vitrocéramique, et/ou
- dans lequel la plaque de cuisson à induction (1) est actionnée avec une interface utilisateur, spécialement sensible au toucher, disposée de préférence sur la surface et/ou
- dans lequel au moins deux étages de puissance (10) et/ou éléments d'induction (21) peuvent être couplés à une même zone de cuisson.

4. Procédé selon la revendication 1, 2 ou 3, dans lequel la valeur de mesure est dérivée sur la base de la chute de tension au niveau d'une résistance shunt (Rₛₕᵤₙₜ) couplée à un bras d'un redresseur en pont (13) et/ou dans lequel la valeur de mesure est dérivée sur la base de la chute de tension au niveau d'une résistance shunt (Rₛₕᵤₙₜ) couplée à un élément de commutation (20) spécifiquement un transistor bipolaire à grille isolée IGBT.

5. Method selon la revendication 4, dans lequel la chute de tension mesurée au niveau d'une résistance shunt (Rₛₕᵤₙₜ) est reçue par l'unité de mesure (12), l'unité de mesure (12) fournissant la valeur de mesure sur la base de ladite chute de tension.

6. Procédé selon l'une quelconque des revendications précédentes, dans lequel la valeur de référence est mémorisée dans une entité de mémorisation, l'entité de mémorisation étant accessible par l'unité de commande (11) et/ou dans lequel la valeur de référence correspond à une valeur de mesure fournie par l'unité de mesure (12) sur la base d'une chute de tension aux bornes de la résistance shunt (Rₛₕᵤₙₜ) d'une valeur de résistance nominale lors de l'excitation de l'étage de puissance (10) à des conditions de travail prédéfinies et le couplage de de l'élément d'induction (21) à ladite charge de référence.

7. Procédé selon l'une quelconque des revendications précédentes, dans lequel la valeur de correction est le rapport entre la valeur de mesure et la valeur de référence.

8. Procédé de commande de la puissance transférée à partir d'un ou d'au moins deux étages de puissance (10) à un ou au moins deux éléments d'une batterie de cuisine dans une plaque de cuisson à induction (1), la plaque de cuisson à induction (1) comprenant un ou au moins deux éléments d'induction (21) inclus dans lesdits un ou au moins deux étages de puissance (10) et une ou au moins deux unités de mesure (12), le procédé comprenant les étapes de :
- calcul d'une ou d'au moins deux valeurs de puissance indiquant la puissance transférée à au moins un élément de batterie de cuisine sur la base d'une ou d'au moins deux valeurs de mesure et d'une ou d'au moins deux valeurs de correction, les une ou au moins deux valeurs de correction étant mémorisées dans une ou au moins deux entités de mémorisation ; et
- commande de la puissance transférée aux un ou au moins deux éléments de batterie de cuisine sur la base des une ou au moins deux valeurs de puissance.

9. Procédé de commande de la puissance transférée à partir d'un étage de puissance (10) à un élément de batterie de cuisine dans une plaque de cuisson à induction (1) selon la revendication 8, la plaque de cuisson à induction (1) comprenant au moins un élément d'induction (21) inclus dans ledit étage de puissance (10), une unité de mesure (12) et une unité de commande (11), le procédé comprenant les étapes suivantes :
- alimentation de l'étage de puissance (10) transférant ainsi une puissance à un élément de batterie de cuisine placé sur l'élément d'induction (21) ;
- dérivation d'une valeur de mesure indiquant la puissance transférée à partir de l'étage de puissance (10) à l'élément de batterie de cuisine au moyen de ladite unité de mesure (12) ;
- calcul d'une valeur de puissance indiquant la puissance transférée à un élément de batterie de cuisine sur la base de la valeur de mesure et d'une valeur de correction au moyen d'une unité de commande (11), la valeur de correction étant mémorisée dans une entité de mémorisation accessible par ladite unité de commande ; et
- commande de la puissance transférée à l'élément de batterie de cuisine sur la base de la valeur de puissance.

10. Procédé selon la revendication 8 ou 9,
- la plaque de cuisson à induction (1) comprenant un, au moins deux, au moins trois ou au moins quatre étages de puissance (10), spécialement deux, trois, quatre ou six étages de puissance (10) et/ou
- la plaque de cuisson à induction (1) comprenant un, deux ou au moins deux unités d'excitation (14), les unités d'excitation générant de préférence une fréquence de sortie entre 10 kHz et 100 kHz et/ou
- la plaque de cuisson à induction (1) comprenant un, deux ou au moins deux redresseurs en pont (13) et/ou la plaque de cuisson à induction (1) comprenant un, deux ou au moins deux circuits de filtre et/ou
- dans lequel la plaque de cuisson à induction (1) est actionnée avec une alimentation électrique monophasée et/ou une alimentation électrique biphasée et/ou une alimentation électrique triphasée et/ou
- dans lequel chaque étage de puissance (10) est assigné au même redresseur en pont (13) ou à un redresseur en pont séparé (13) et/ou
- dans lequel au moins deux ou au moins trois étages de puissance (10) sont assignés à chaque redresseur en pont (13) et/ou
- dans lequel chaque redresseur en pont (13), chaque étage de puissance (10) ou au moins deux étages de puissance (10) est/sont assignés à la même phase électrique ou à une phase électrique séparée et/ou
- dans lequel chaque redresseur en pont (13) et/ou chaque étage de puissance (10) est assigné à un circuit de filtre et/ou
- dans lequel chaque étage de puissance (10) comprend un IGBT, une paire d'IGBT ou au moins deux IGBT et/ou
- dans lequel chaque unité d'excitation (14) excite un ou au moins deux étages de puissance (10) et/ou
- dans lequel un étage de puissance (10) et une unité d'excitation assignée (14) forment un générateur ou onduleur, lequel génère un signal électromagnétique à haute fréquence pour chauffer au moins un élément de batterie de cuisine, spécialement un récipient de cuisson tel qu'une marmite et/ou
- dans lequel les éléments d'induction (21) sont disposés en au moins deux rangées et/ou au moins deux colonnes, spécialement en une disposition matricielle et/ou
- dans lequel les éléments d'induction (21) sont recouverts par une surface, spécialement une surface en vitrocéramique, et/ou
- dans lequel la plaque de cuisson à induction (1) est actionnée avec une interface utilisateur, spécialement sensible au toucher, disposée de préférence sur la surface et/ou
- dans lequel au moins deux étages de puissance (10) et/ou éléments d'induction (21) peuvent être couplés à une même zone de cuisson.

11. Procédé selon la revendication 8, 9 ou 10, dans lequel l'unité de commande (11) est une unité de commande à base de logiciel comprenant une entité de traitement, ladite entité de traitement modifiant des valeurs de mesure fournies par le circuit de mesure sur la base de la valeur de correction.

12. Procédé selon l'une ou plusieurs des revendications 8 à 11, dans lequel la valeur de mesure est dérivée à partir d'une chute de tension au niveau d'une résistance shunt (Rₛₕᵤₙₜ) couplée à un bras d'un redresseur en pont (13) et/ou dans lequel la valeur de mesure est dérivée sur la base de la chute de tension au niveau d'une résistance shunt (Rₛₕᵤₙₜ) couplée à un élément de commutation (20) spécifiquement un transistor bipolaire à grille isolée IGBT.

13. Procédé selon la revendication 12, dans lequel la chute de tension mesurée au niveau d'une résistance shunt (Rₛₕᵤₙₜ) est reçue par l'unité de mesure (12), l'unité de mesure (12) fournissant la valeur de mesure sur la base de ladite chute de tension.

14. Plaque de cuisson à induction comprenant un étage de puissance (10) avec au moins un élément de commutation (20) pour permettre le passage d'un courant alternatif à travers un élément d'induction (21), une unité de commande (11) pour commander le flux de courant à travers l'élément d'induction (21) et une unité de mesure (12), l'unité de mesure (12) étant adaptée pour fournir une valeur de mesure à l'unité de commande, la valeur de mesure indiquant la puissance transférée à partir de l'élément d'induction (21) à un élément de batterie de cuisine placé sur l'élément d'induction (21), dans laquelle l'unité de commande (11) est couplée à une entité de mémorisation, l'entité de mémorisation mémorisant une valeur de correction déterminée durant un sous-programme d'étalonnage, l'unité de commande (11) est adaptée pour modifier la valeur de mesure sur la base de la valeur de correction et dériver une valeur de puissance sur la base de la valeur de mesure modifiée et l'unité de commande (11) est adaptée pour commander la puissance transférée à l'élément de batterie de cuisine sur la base de la valeur de puissance.

15. Plaque de cuisson à induction selon la revendication 14, comprenant un ou au moins deux étages de puissance (10) avec au moins un élément de commutation (20) pour permettre le passage d'un courant alternatif à travers un ou au moins deux éléments d'induction (21), au moins une unité de commande (11) pour commander le flux de courant à travers les un ou au moins deux éléments d'induction (21) et une ou au moins deux unités de mesure, les une ou au moins deux unités de mesure étant adaptées pour fournir une ou au moins deux valeurs de mesure à l'au moins une unité de commande (11), les une ou au moins deux valeurs de mesure indiquant la puissance transférée à partir des un ou au moins deux éléments d'induction (21) à un ou au moins deux éléments de batterie de cuisine placés sur les un ou moins deux éléments d'induction (21), dans laquelle l'au moins une unité de commande (11) est couplée à une ou au moins deux entités de mémorisation, les une ou au moins deux entités de mémorisation mémorisant une ou au moins deux valeurs de correction déterminées durant au moins un sous-programme d'étalonnage, l'au moins une unité de commande (11) est adaptée pour modifier les une ou au moins deux valeurs de mesure sur la base des une ou au moins deux valeurs de correction et dériver une ou au moins deux valeurs de puissance sur la base des une ou au moins deux valeurs de mesure modifiées et l'au moins une unité de commande (11) est adaptée pour commander la puissance transférée aux un ou au moins deux éléments de batterie de cuisine sur la base des une ou au moins deux valeurs de puissance.

16. Plaque de cuisson à induction selon la revendication 15, dans laquelle l'unité de commande (11) est une unité de commande à base de logiciel comprenant au moins une entité de traitement, ladite entité de traitement étant adaptée pour modifier des valeurs de mesure fournies par le circuit de mesure sur la base de la valeur de correction et/ou dans lequel l'entité de mémorisation comprend une mémoire de données non volatile.
